# EUROPEAN PATENT SPECIFICATION

(11) **EP 1 120 679 B1**
(45) Date of publication and mention of the grant of the patent: **12.07.2006**
(21) Application number: 00950060.4
(22) Date of filing: 10.08.2000
(51) Int. Cl.: G02F 1/133, G09G 3/36, G09G 3/34

(54) **FERROELECTRIC LIQUID CRYSTAL DISPLAY**
ANZEIGE MIT FERROELEKTRISCHEM FLÜSSIGKRISTALL
AFFICHEUR A CRISTAUX LIQUIDES FERROELECTRIQUES

(30) Priority: 10.08.1999 JP 22670999
(43) Date of publication of application: 01.08.2001
(73) Proprietor: CITIZEN WATCH CO. LTD., Tokyo 188-8511 (JP)
(72) Inventor: Kondoh, Shinya, Citizen Watch Co., Ltd., Tokorozawa-shi, Saitama 359-8511 (JP)
(74) Representative: Patentanwälte Ruff, Wilhelm, Beier, Dauster & Partner
(86) International application number: PCT/JP2000/005381
(87) International publication number: WO 2001/013167

(56) References cited:
- EP-A- 0 526 097
- EP-A- 0 572 143
- EP-A- 0 573 174
- JP-A- 4 249 290
- JP-A- 9 080 388
- JP-A- 9 222 593
- JP-A- 10 123 486
- JP-A- 10 253 943
- JP-A- 10 253 944
- JP-A- 10 307 284
- JP-A- 11 174 415
- US-A- 5 534 884
- PATENT ABSTRACTS OF JAPAN vol. 1999, no. 09, 30 July 1999 (1999-07-30) -& JP 11 119189 A (FUJITSU LTD), 30 April 1999 (1999-04-30) -& US 2002/000960 A1 (TOSHIAKI YOSHIHARA ET AL) 3 January 2002 (2002-01-03)

## Description

### TECHNICAL FIELD

The present invention relates to a ferroelectric liquid crystal display such as a liquid crystal display panel or a liquid crystal light shutter array having a liquid crystal layer of ferroelectric liquid crystal.

### BACKGROUND ART

Generally, ferroelectric liquid crystal molecules are known to move along the side surface of a cone (hereinafter referred to as "the liquid crystal cone") with the change of an external object such as the electric field. In the case where the ferroelectric liquid crystal is held between a pair of substrates and used as a liquid crystal panel, the ferroelectric liquid crystal is controlled in such a manner that the ferroelectric liquid crystal molecules are located at one of the two places on the side surface of the liquid crystal cone. The stable state in which the liquid crystal molecules are located at one of the two places is called a first ferroelectric state or a second ferroelectric state, as the case may be.

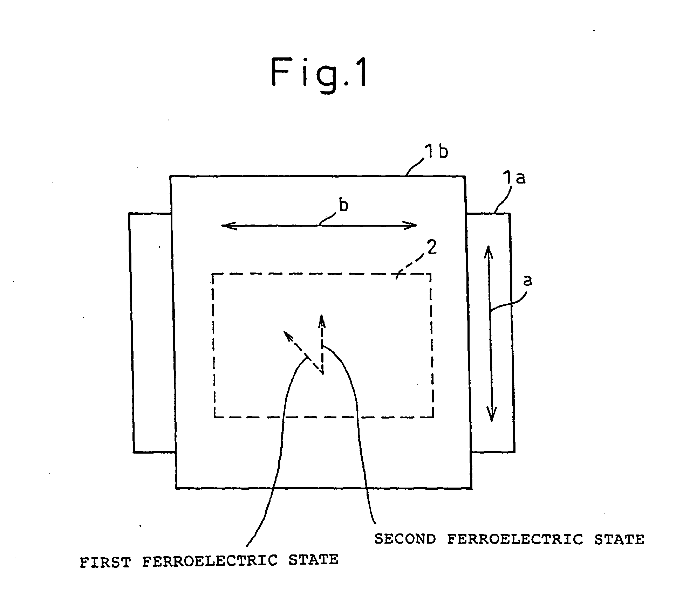

Fig. 1 is a diagram showing an example of the configuration of a ferroelectric liquid crystal panel when the ferroelectric liquid crystal is used as a display. A liquid crystal cell 2 is arranged between polarization plates 1a, 1b conforming to a crossed Nicol in such a manner that either the polarization axis a of the polarization plate la or the polarization axis b of the polarization plate 1b is parallel to the direction along the long axis of the molecules in the first ferroelectric state or the second ferroelectric state when a voltage is not applied. In the case of Fig. 1, the direction along the long axis of the molecules in the second ferroelectric state coincides with the polarization axis a.

In the case where the polarization plate is arranged as shown in Fig. 1, the light is not transmitted and black is displayed, on the ferroelectric liquid crystal panel, when the ferroelectric liquid crystal is in the ferroelectric state in which the direction along the long axis of the molecules coincides with the direction along the polarization axis of the polarization plate. With the configuration shown in Fig. 1, the light is not transmitted and black is displayed (non-transmission state), on the ferroelectric liquid crystal panel, when the ferroelectric liquid crystal is in the second ferroelectric state.

With the change in polarity of the applied voltage, on the other hand, the ferroelectric liquid crystal comes to assume a ferroelectric state with the direction along the long axis of the molecules thereof failing to coincide with the direction along the polarization axis of the polarization plate. In such a case, the molecules of the ferroelectric liquid crystal are slanted at an angle to the polarization axis, and therefore the light from the backlight is transmitted and white is displayed (transmission state).

In Fig. 1, the direction along the long axis of the molecules when the ferroelectric liquid crystal is in the second ferroelectric state is rendered to coincide with the direction along the polarization axis of the polarization plate. On the other hand, the direction along the long axis of the molecules when the ferroelectric liquid crystal is in the first ferroelectric state can be rendered to coincide with the direction along the polarization axis of the polarization plate. In such a case, black can be displayed (non-transmission state) when the ferroelectric liquid crystal is in the first ferroelectric state, and white can be displayed (transmission state) when the ferroelectric liquid crystal is in the second ferroelectric state.

The present invention is applicable to either panel configuration. In the following description, the case where the panel configuration shown in Fig. 1 is employed will be explained.

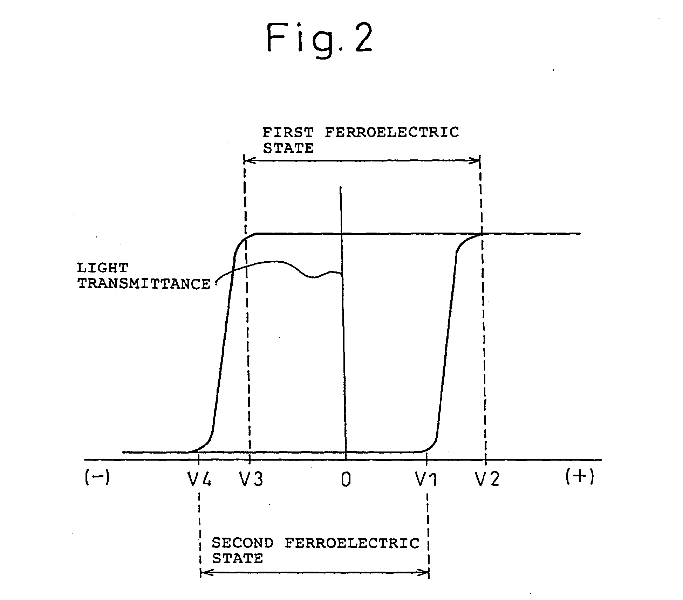

When a voltage is applied to this ferroelectric liquid crystal panel, the change of the light transmittance plotted as a graph follows a loop as shown in Fig. 2.

The switching of the ferroelectric liquid crystal, i.e. the transition from one ferroelectric state to the other ferroelectric state occurs only in the case where a voltage with the value of the product of the wave width value and the wave height value, which is not less than the a threshold value, is applied to the ferroelectric liquid crystal molecules. As shown in Fig. 2, either the first ferroelectric state (transmission, white display) or the second ferroelectric state (non-transmission, black display) is selected according to the difference in polarity of the applied voltage.

The voltage value at which the light transmittance begins to change, when the voltage is applied and increased, is denoted by V1, the voltage value at which the change of the light transmittance is saturated is denoted by V2, on the other hand, when the voltage is decreased and further the voltage of opposite polarity is applied, the voltage value at which the light transmittance begins to decrease is denoted by V3, and the voltage value at which the change of the light transmittance is saturated is denoted by V4.

As shown in Fig. 2, in the case where the value of the voltage applied is not less than the threshold value of the ferroelectric liquid crystal molecules, the first ferroelectric state (transmission, white display) is selected. In the case where a voltage of opposite polarity not less than the threshold value of the ferroelectric liquid crystal molecules is applied, on the other hand, the second ferroelectric state (non-transmission, black display) is selected.

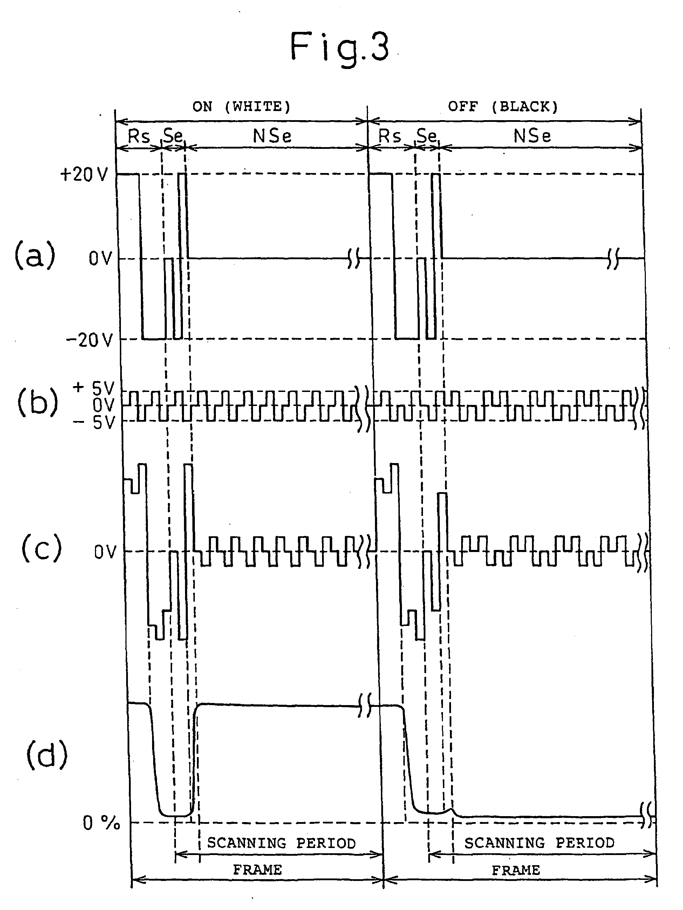

A typical driving waveform of a ferroelectric liquid crystal display using a ferroelectric liquid crystal panel with the polarization plate arranged as shown in Fig. 1 is shown in Fig. 3. In the drawing, (a) designates a scanning voltage waveform, (b) a signal voltage waveform, (c) a combined voltage waveform, and (d) a light transmittance.

A time division driving method is known as a method of driving a ferroelectric liquid crystal display. In the time division driving method, a plurality of scanning electrodes and signal electrodes are formed on a substrate and a voltage is applied to each electrode to drive a liquid crystal element.

As shown in Fig. 3, the writing operation is performed by applying a scanning voltage (a) to the scanning electrodes, a signal voltage (b) to the signal electrodes and a combined voltage (c) to the pixels of the liquid crystal panel. Fig. 3 shows driving waveforms of two frames, in which ON indicates the white display and OFF the black display. The driving waveforms shown in Fig. 3 have one scanning period for carrying out the display based on one display data. One scanning period has therein a selection period (Se) for selecting the display state and a non-selection period (NSe) for holding the selected display state, and a reset period (Rs) is provided before the start of the selection period (Se).

To write the next display, the ferroelectric liquid crystal is reset to one ferroelectric state in the reset period (Rs) regardless of the immediately preceding display state. In the case of Fig. 3, in the first half of the reset period (RS), the ferroelectric liquid crystal is reset to the first ferroelectric state in which the liquid crystal is white display (transmission state) and, in the last half, is reset to the second ferroelectric state in which the liquid crystal is black display (non-transmission state). In this method of driving the ferroelectric liquid crystal display, it is common to provide a reset period for applying a pulse of a different polarity regardless of the immediately preceding display state in order to assure a satisfactory display.

Conventionally, in the case where an image with a rapidly changing screen is displayed on a liquid crystal display unit using an ordinary liquid crystal such as nematic one, a phenomenon has occurred in which an image accurately following the screen change cannot be displayed. In a typical case where an image of a ball moving about in a game is displayed on a liquid crystal display unit, a phenomenon may occur in which the contour of the ball cannot be displayed accurately but displayed blurred (hereafter, this phenomenon is referred to as the "trailing phenomenon"). Conventionally, this trailing phenomenon was considered to occur due to the slow switching of the liquid crystal molecules. In recent years, however, it has been reported that this phenomenon occurs not only for the slow switching of the liquid crystal molecules, but also for the conventional driving method of the liquid crystal. The reason is that, in the scanning period in which the display is written in the pixels based on the display data, when writing the next display in the pixels without reset the display preceding the writing, the preceding display is left as a persisting image in the human eyes viewing the display, thereby causing the trailing phenomenon.

The ferroelectric liquid crystal has so far been considered to cause the trailing phenomenon not easily due to its rapid switching characteristic as compared with an ordinary liquid crystal. The recent research efforts have revealed, however, that in addition to the rapid switching characteristic, the driving method unique to the ferroelectric liquid crystal, i.e. the provision of a reset period described above is another contributing factor for a reduced trailing phenomenon.

Nevertheless, the past research efforts have not clarified the manner in which the ferroelectric liquid crystal is to be controlled most effectively during the reset period to reduce the trailing phenomenon. Further, the problem still remains unsolved that the mere provision of a reset period cannot completely eliminate the trailing phenomenon in the animation display in which display data changes at high speed successively.

A ferroelectric liquid crystal display according to the preamble of claim 1 is disclosed in EP 0 526 097 A2. In this known display device a signal to erase the display is applied to the display panel in order to change the liquid crystal panel to a black display state, when an access sampling counter determines that there is no demand for a display by e.g. a host CPU for a predetermined period. The application of a driving signal, as used in a normal display mode, is then stopped and the liquid crystal panel is driven into a memory status. The normal drive state is resumed, when a next access, i.e. write request, to a video memory is determined according to the precharacterizing part of claim 1.

JP-A-10123486 discloses a ferroelectric liquid crystal display according to the precharacterizing part of claim 1 in which, when there is a picture to display, the width of a pulse to erase the display is determined in accordance with the time elapsed from the picture displayed last, the ambient temperature, and an ON pixel ratio of the picture to be displayed.

JP-A-11119189 teaches to stop the light emission from a backlight during an erase period in a ferroelectric liquid crystal display to avoid unnecessary power consumption by the backlight. A similar measure is disclosed in JP-A-10253943 for an antiferroelectric liquid crystal display.

JP-A-10307284 teaches for an antiferroelectric liquid crystal display to achieve a constant luminance even when changing a reset period by adjusting the brightness of a backlight in dependence of the length of the reset period.

US 5,534,884 discloses a ferroelectric liquid crystal display with two memories for storing two successive frames, and a comparator for comparing the display data of the two successive frames and outputting control signals with information about the result of the comparison.

The object of the present invention is to provide a ferroelectric liquid crystal display using a ferroelectric liquid crystal having a superior display quality, in which an optimum reset period is provided for displaying an animation or a still image, and a corresponding ferroelectric liquid crystal display driving method.

### DISCLOSURE OF THE INVENTION

In order to achieve the above-mentioned object, a ferroelectric liquid crystal display according to claim 1 and corresponding driving methods according to claim 10 and 11 are provided.

In this invention, the reset period is provided for each pixel. Also, the reset periods can be provided at the same timing to reset all the pixels at the same time.

The ferroelectric liquid crystal panel has a backlight, which is turned off during the reset period and turned on during the remaining period. The ferroelectric liquid crystel panel also has a mechanism for adjusting the brightness of the backlight in accordance with the length of the reset period.

In the reset period, the ferroelectric liquid crystal has a first ferroelectric state and a second ferroelectric state, and the scanning period has a selection period (Se) for selecting a display state and a non-selection period (NSe) for holding the selected display state.

The mechanism for adjusting the length of the reset period is a control device for adjusting the reset period and can be adjusted manually while watching the screen. The mechanism for adjusting the length of the reset period, on the other hand, has a plurality of display data memories for continuously storing the display data, or sequentially storing the display data at intervals of a plurality of blocks into which the display data are divided, and a display data comparison circuit for comparing the display data in the display data memories with each other and outputting the result of comparison, i.e. the change amount of the display data. The reset period can thus be automatically adjusted according to this output.

### EFFECTS OF THE INVENTION

With the ferroelectric liquid crystal display according to this invention, a reset period is provided in which black is displayed regardless of the display state of the ferroelectric liquid crystal, and the length of the reset period is adjusted according to the change amount of display data, i.e. whether an animation or a still image is involved, thereby making it possible to produce a superior display quality free of the trailing phenomenon. Also, the brightness of the backlight is adjusted in accordance with the length of the reset period. Therefore, a satisfactory display can be obtained by maintaining a certain brightness, both in the case of a display slow in motion such as a still image and in the case of a display rapid in motion such as a game.

The ferroelectric liquid crystal display according to the invention, which is described as an invention for display, can be used as a liquid crystal shutter. In such a case, the driving waveforms described as related to an animation and a still image correspond to the driving waveforms for high shutter speed and low shutter speed, respectively. By using these driving waveforms, therefore, the present invention can be applied to the liquid crystal shutter.

### BRIEF DESCRIPTI0N OF THE DRAWINGS

Fig. 1 is a diagram showing an example of a configuration of a ferroelectric liquid crystal panel using a ferroelectric liquid crystal as a display.
Fig. 2 is a graph showing the change in light transmittance versus the voltage applied to the ferroelectric liquid crystal panel.
Fig. 3 is a diagram showing driving waveforms of a ferroelectric liquid crystal display usable in the invention.
Fig. 4 is a diagram showing a configuration of a ferroelectric liquid crystal display having a backlight.
Fig. 5 is a diagram showing a configuration of a ferroelectric liquid crystal panel used in the invention.
Fig. 6 is a block diagram showing a circuit configuration of a ferroelectric liquid crystal display according to the invention.
Fig. 7 is a block diagram showing a circuit configuration for adjusting the length of a reset period automatically.
Fig. 8 is a diagram showing an example of a screen stored in a display data memory.
Fig. 9 is a graph showing the relation between the amount of a reset period adjusting volume control and the length of the reset period.
Fig. 10 is a graph showing the relation between the length of the reset period and the brightness of the backlight.
Fig. 11 is a diagram showing driving waveforms of a ferroelectric liquid crystal display according to the invention.

### DETAILED DESCRIPTION OF THE INVENTION

The present inventor has studied the manner in which the ferroelectric liquid crystal is to be controlled during the reset period most effectively. As a result, it has been found that the trailing phenomenon is reduced by changing the pixels to black display when the display data is switched, i.e. before a given display in the pixels is followed by the next display. Specifically, it is necessary to provide a reset period and display black (non-transmission state) before starting the scanning period as described above. It has been confirmed, on the other hand, that the effect of reducing the trailing phenomenon is not substantially produced in the case where white is displayed during a reset period.

As indicated in the reset period (Rs) of Fig. 3, it is common to set the liquid crystal of the ferroelectric liquid crystal display to both the first and second ferroelectric states during the reset period. In the case of the driving waveforms shown in Fig. 3, a voltage higher than a positive threshold value is applied in the first half of the reset period (Rs) and the ferroelectric liquid crystal becomes the first ferroelectric state in which white is displayed (transmission state). In the last half of the reset period (Rs), on the other hand, a voltage higher than a negative threshold value is applied and becomes the second ferroelectric state in which black is displayed (non-transmission state). In this way, both positive and negative voltages are applied during the reset period for producing an alternating current. Also in the conventional driving method shown in Fig. 3, black is always displayed (non-transmission state) during the reset period, and therefore the trailing phenomenon can be reduced as compared with the driving method lacking the reset period.

In this connection, it has been found that the trailing phenomenon can be more effectively reduced by setting a long reset period and a sufficiently long period of black display. Especially in the case of an image of which display is switched rapidly such as an animation used in a game, the trailing phenomenon appears significantly. In such a case, the trailing phenomenon is reduced and a more desirable result is obtained by setting a long period of black display by lengthening the reset period. Conversely, in the case of an image such as a still image which is switched slowly, the trailing phenomenon can be sufficiently eliminated even by shortening the reset period for short black display.

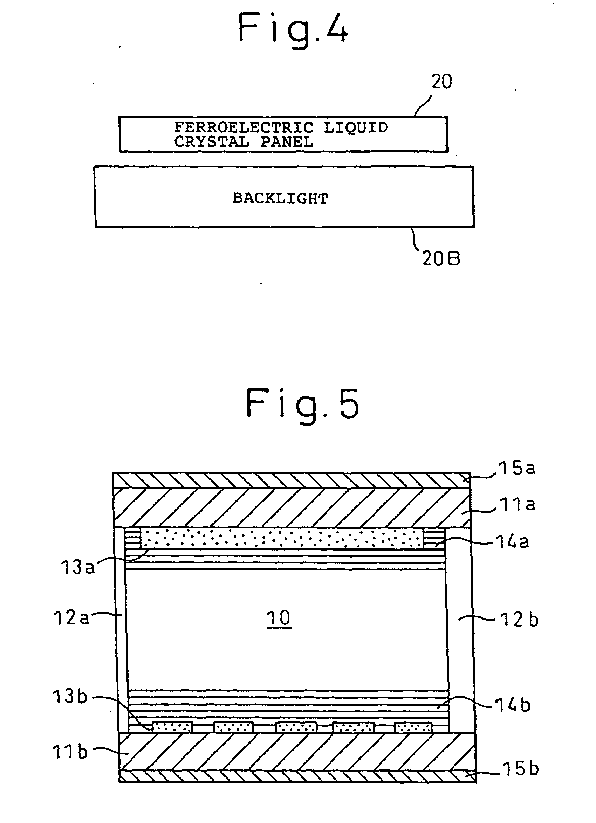

In the case where the driving waveforms described above are used, white display (transmission state) as well as black display (non-transmission state) are carried out during the reset period (Rs). The trailing phenomenon can be effectively reduced, however, by setting the entire reset period for black display. For this reason, the backlight is turned off during the reset period by using the ferroelectric liquid crystal display having a configuration including a ferroelectric liquid crystal panel 20 with a backlight 20B as shown in Fig. 4. During the reset period, the ferroelectric liquid crystal is in the first and second ferroelectric states as shown in Fig. 3, and therefore is in the transmission state during the first half of the reset period. If the backlight is turned off during the reset period as described above, however, the entire display during the reset period is recognized as black display by the human eyes, thereby reducing the trailing phenomenon.

Lengthening the black display period by lengthening the reset period, however, reduces the brightness of the whole display in spite of a reduced trailing phenomenon. As a result, a satisfactory display quality cannot be obtained. In view of this, according to this invention, the length of the reset period is adjusted in accordance with the image to be displayed while, at the same time, adjusting the brightness of the backlight turned on during the period other than the reset period in accordance with the length of the reset period. In the case where the reset period is long, for example, the turn-off period of the backlight lengthens and the whole display is darkened. Therefore, the brightness of the backlight is set to a high level. In the case where the reset period is short, on the other hand, the brightness of the backlight is not set to a high level or set to a low level. By adjusting the brightness of the backlight in this way, the brightness of the screen is prevented from changing extremely with the change, if any, in the length of the reset period, and therefore an optimum display quality can always be secured.

### [Embodiment 1]

An embodiment of the invention will be described in detail below with reference to the drawings. Fig. 5 is a diagram showing a panel configuration of a ferroelectric liquid crystal panel according to this embodiment. The liquid crystal panel used in this embodiment is configured with a pair of glass substrates 11a, 11b having a ferroelectric liquid crystal layer 10 about 1.7 µm thick. The opposed surfaces of the glass substrates are formed with a scanning electrode 13a and signal electrodes 13b, respectively, on which polymer alignment films 14a, 14b are coated and processed by rubbing. Further, on the outside surface of one glass substrate, a first polarization plate 15a is arranged in such a manner that the polarization axis thereof is parallel to the direction along the long axis of the ferroelectric liquid crystal molecules in the second ferroelectric state when no voltage is applied thereto. On the outside of the other glass substrate, on the other hand, a second polarization plate 15b is arranged with its polarization axis oriented at 90° to the polarization axis of the first polarization plate 15a.

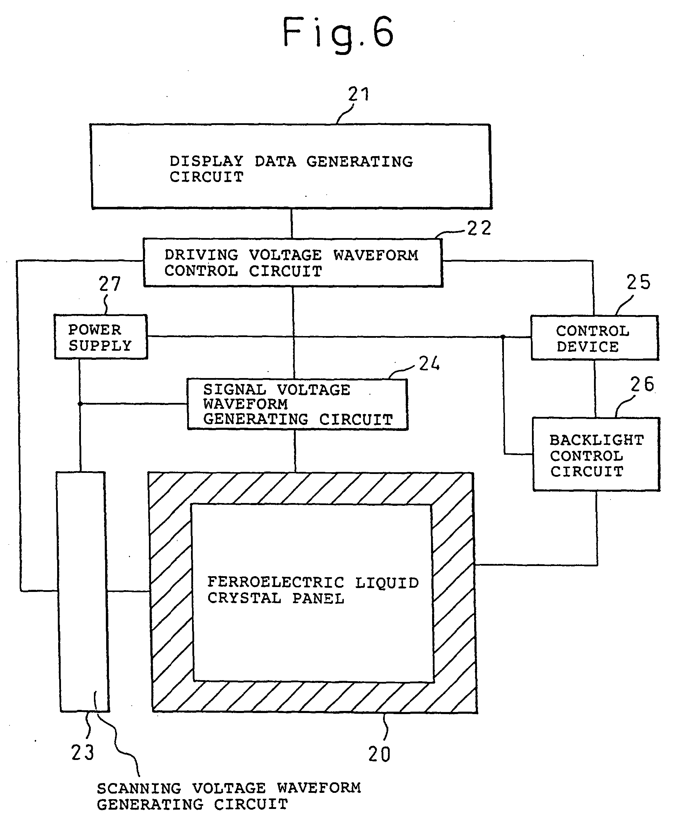

Fig. 6 is a block diagram showing a circuit configuration of a ferroelectric liquid crystal display according to this invention. The ferroelectric liquid crystal display according to this invention comprises a ferroelectric liquid crystal panel 20, a display data generating circuit 21, a driving voltage waveform control circuit 22, a scanning voltage waveform generating circuit 23, a signal voltage waveform generating circuit 24, a reset period adjusting control device 25, a backlight control circuit 26 and a power circuit 27. The reset period adjusting control device 25 adjusts the length of the reset period and, further, the backlight control circuit 26 changes the brightness of the backlight according to the length of the reset period.

Fig. 3 shows the conventional driving waveforms of the ferroelectric liquid crystal display which can be used in the present invention.

The driving waveforms according to this invention have at least one scanning period for carrying out the display based on one display data. In Fig. 3, each frame has one scanning period, but a plurality of scanning periods may be included in one frame.

As explained above with reference to Fig. 3, the scanning period has a selection period (Se) for selecting the display state according to the display data of the pixels, a non-selection period (NSe) for holding the selected state and a reset period (Rs) before starting the selection period (Se).

The reset period (Rs) is configured with 6 phases, in which the scanning voltage waveform (a) is set to 20 V during the three phases of the first half and to -20 V during the three phases of the last half. In the final pulse of the reset period, black is always displayed as the second ferroelectric state regardless of the immediately preceding display data. A voltage of 0 V is applied in the first phase, a voltage of -20 V in the second phase and a voltage of 20 V in the third phase of the selection period (Se) of the scanning voltage waveform (a), while the applied voltage during the non-selection period (NSe) is 0 V. Also, the signal voltage waveform (b) is set to a voltage of ± 5 V. The width of each pulse is set to about 35 µs. The voltage actually applied to the pixels is a combined voltage waveform (c) of this scanning voltage waveform and the signal voltage waveform, and the state of the ferroelectric liquid crystal molecules is determined in each pixel.

In the case where the display data is ON (white display), the third phase of the selection period (Se) of the combined voltage waveform (c) exceeds the positive threshold value of the ferroelectric liquid crystal and the liquid crystal becomes the first ferroelectric state. During the non-selection period (NSe), this state is held and white is displayed. In the case where the display data is OFF (black display), on the other hand, black is always displayed during the reset period (Rs) regardless of the previous display state. During the selection period, therefore, a combined voltage lower than the threshold voltage is applied to hold the black display of the reset period.

According to this invention, in the case where display is based on the display data which is immediately changed in the next display, i.e. in the case where an animation having a rapid motion such as a game is displayed, the person observing the image on display can lengthen the reset period using the reset period adjusting control device 25 shown in Fig. 6 while watching the state of the image on display. For example, the reset period is lengthened by increasing the number of phases of the reset period. On the other hand, in the case where the display data remains unchanged as in a still image, i.e. in the case where the display is slow in motion, the reset period is shortened. By doing so, the trailing phenomenon is eliminated by displaying black during the last half of the reset period while changing the length of black display in accordance with the change amount of the display data regardless of the animation with the display successively changing based on the display data or the still image with the display remaining substantially unchanged.

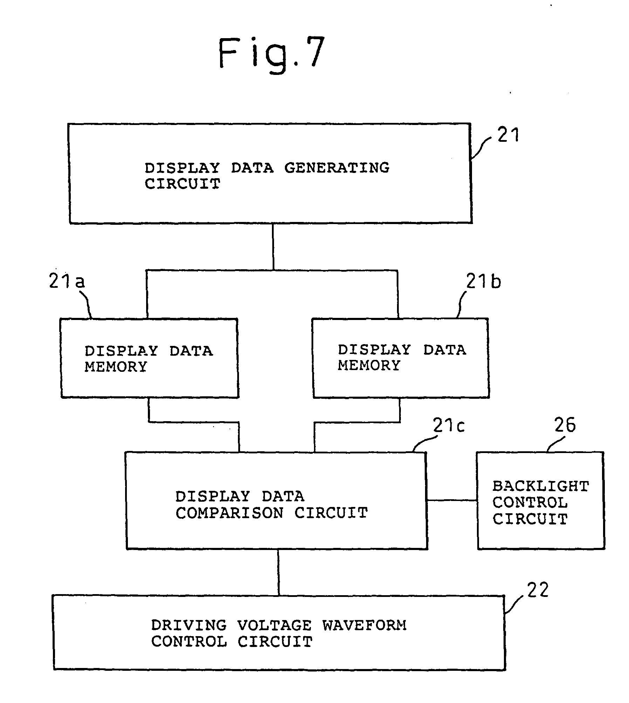

Further, the length of black display can be adjusted by adjusting the length of the reset period automatically. Fig. 7 is a block diagram showing a circuit configuration for adjusting the length of the reset period automatically. This circuit configuration includes display data memories 21a, 21b for storing the display data from the display data generating circuit 21 of Fig. 6 and a display data comparison circuit 21c for comparing the display data of the display data memories and outputting the result to the driving voltage waveform control circuit 22 of Fig. 6. In this circuit configuration, the display data of the successive screens from the display data generating circuit 21 are stored in the display data memories 21a, 21b, and the two stored display data are compared in the display data comparison circuit 21c. In the case where the change rate of the data thus compared is large, it is determined that an image having a rapid motion is on display. In the case where the change rate of the data compared is small or zero, on the other hand, it is determined that an image having a slow motion or a still image is on display, and the result is input to the driving voltage waveform control circuit 22. In the case where the change rate of the data compared is large, the reset period is automatically lengthened. In the case where the change rate is zero or substantially nil, on the other hand, the reset period is shortened automatically. Also in this case, the brightness of the backlight is changed by the backlight control circuit 26 in accordance with the length of the reset period. Incidentally, the backlight control circuit 26 changes the brightness of the backlight in accordance with the output of the display data comparison circuit 21c.

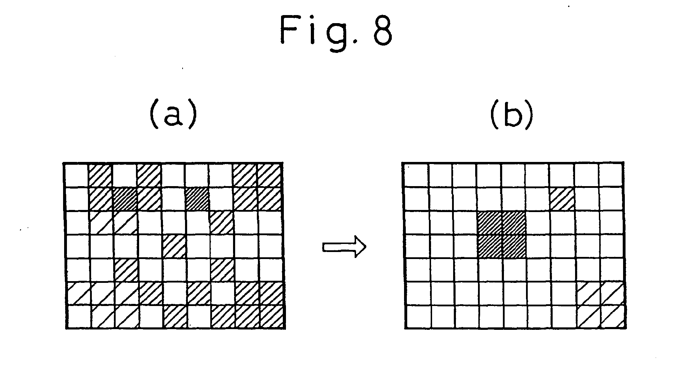

Fig. 8 is a diagram showing an example of screens stored in the display data memories 21a, 21b. These display data memories have stored therein the total value of the digitized brightness of the pixels of the screen. The numerical value of brightness is set to 1 for black and 256 for white, for example. The screens (a), (b) in Fig. 7 are successive screens, for example. The display data comparison circuit 21c of Fig. 7 compares the total value of the brightness of the screens (a) and (b), and in accordance with the change rate of the data, the driving voltage waveform control circuit adjusts the reset period automatically. In the case of the screens (a) and (b) shown in Fig. 8, the screen (b) has a large white display portion, and therefore the total value of brightness of the screen (b) is larger than that of the screen (a).

Either successive display data may be stored, or at intervals of a plurality of data, such as every other display data or every two other display data, the display data may be stored sequentially in the display data memories 21a, 21b. Also, three or more display data memories may be used instead of two as in this embodiment.

By providing display data memories and operating them in interlocked relation with the mechanism for adjusting the length of the reset period automatically in this way, the length of the reset period can be automatically adjusted even in the case where the ferroelectric liquid crystal display is incorporated in as a part of a large-sized apparatus. As a result, it is possible to obtain a liquid crystal display which requires little maintenance and can maintain a superior display state automatically.

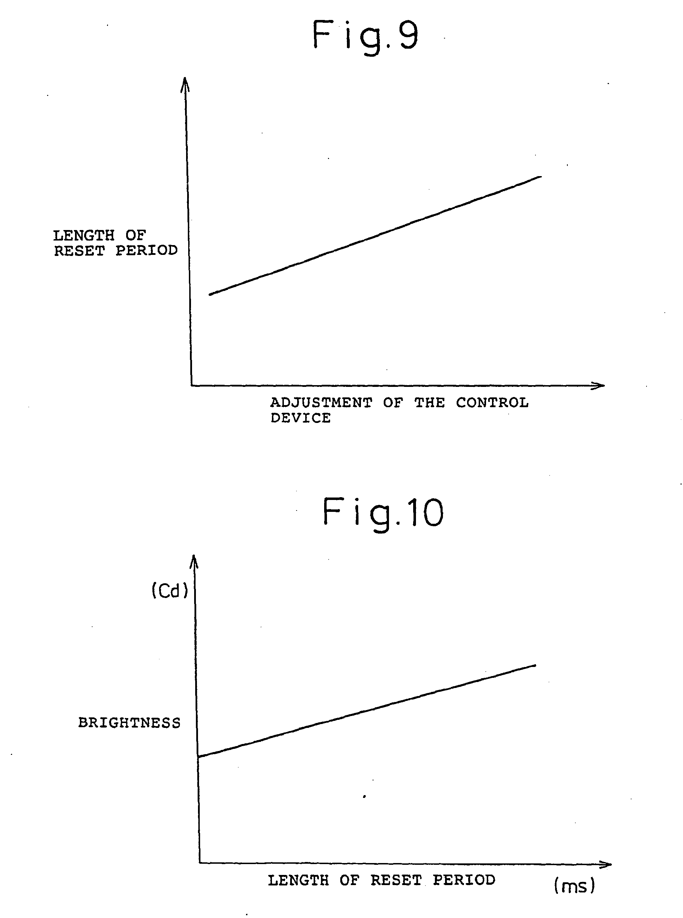

Fig. 9 is a graph showing the relationship between the adjustment of the control device and the length of the reset period. As shown, the reset period is lengthened by increasing the adjustment of the control device.

Fig. 10 is a graph showing the relationship between the length of the reset period and the brightness of the backlight. As shown, in the case where the reset period is long, the brightness of the backlight turned on during the period other than the reset period is increased, and the brightness is decreased in the case where the reset period is short. This adjustment is carried out by the reset period adjusting control device 25 and the backlight control circuit 26 shown in Fig. 6. By making adjustment in this way, a sufficiently bright liquid crystal display with a superior display quality was obtained even when the reset period is lengthened.

### [Embodiment 2]

Another embodiment of the invention will be described in detail with reference to the drawings. This embodiment, like the first embodiment, uses the circuit configuration shown in Fig. 6 and the panel configuration shown in Fig. 5. The polarization plate is also arranged as shown in Fig. 1, as in the first embodiment, and as shown in Fig. 2, set in transmission state when the liquid crystal is in the first ferroelectric state, and in non-transmission state when the liquid crystal is in the second ferroelectric state. Also according to this embodiment, as shown in Fig. 4, a backlight 20B is arranged under a liquid crystal display 20.

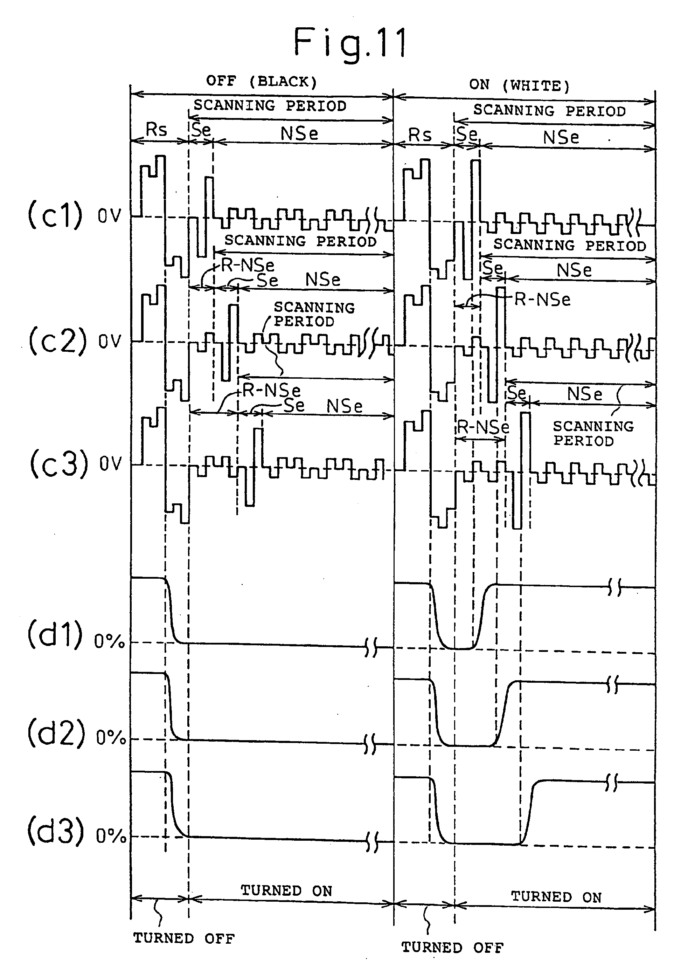

In the second embodiment, as in the first embodiment, the ferroelectric liquid crystal is set in both the first and second ferroelectric states during the reset period. According to the first embodiment, the reset period is provided for each pixel (i.e. for each scanning line), and therefore is displaced slightly for each scanning line. In the second embodiment, on the other hand, the reset period is provided to reset all the pixels at the same time. Fig. 11 is a diagram showing driving waveforms used in this embodiment. The diagram shows the driving waveforms and the light transmittance thereof in the case where the display data is ON (white display) and it is OFF (black display). c1, c2, c3 each designate a combined voltage waveform applied to each pixel, and d1, d2, d3 the transmittance of each pixel in the case where the combined voltage waveforms c1, c2, c3 are applied, respectively.

Each combined voltage waveform has at least one scanning period in order to carry out the display based on one display data. In Fig. 11, each frame has one scanning period. Instead, a plurality of scanning periods may be included in one frame. Each scanning period has therein a selection period (Se) for selecting a display state based on the display data and a non-selection period (NSe) for holding the selected display state. Also, a reset period (Rs) is provided for setting all the pixels to the first ferroelectric state and the second ferroelectric state at the same time before starting the selection period (Se). The second embodiment is different from the first embodiment in that all the pixels are reset at the same time. As a result, a scanning line for which the scanning voltage is applied later has a non-selection period (R-NSe) for holding a reset state after the reset period (Rs). Thus, the period during which the reset state is maintained is lengthened. In the case of the driving waveforms shown in Fig. 11, for example, the period of the second ferroelectric state (non-transmission) is longer for pixel c3 than for pixel c1.

In the scanning voltage waveform (the same as the waveform of Fig. 3(a)) applied to c1, pulses of 6 phases are applied during the reset period immediately before starting the selection period, of which +20 V is applied during the three phases of the first half and a voltage of -20 V is applied during the three phases of the last half. Pulses of three phases are applied during the selection period of the scanning voltage waveform, of which a voltage of 0 V is applied during the first phase, a voltage of -20 V during the second phase and a voltage of +20 V during the third phase. Also, the applied voltage during the non-selection period is set to 0 V. Further, a voltage of ± 5 V is applied as a voltage waveform on signal side. The width of each pulse is set to about 35 µs.

C1 to C3 of Fig. 11 show a waveform of a combined voltage of the voltage on the scanning side and the voltage on the signal side but not the voltage waveform on the scanning side.

The ferroelectric liquid crystal finally reaches the second ferroelectric state during the reset period (Rs), and displays black at the end of the reset period. In the case where the display data is ON (white display), like in the driving method shown in Fig. 3, the third phase of the selection period of the combined voltage waveform exceeds the positive threshold value of the ferroelectric liquid crystal so that the liquid crystal reaches the first ferroelectric state, while this state is held for white display during the non-selection period. In the case where the display data is OFF (black display), on the other hand, black is always displayed during the reset period, and therefore a combined voltage of less than the threshold value is applied during the selection period thereby the black display is held during the reset period.

The turn-on state of the backlight corresponding to each combined voltage waveform is shown in Fig. 11. Regardless of the previous display state, the liquid crystal is always set to the first ferroelectric state for transmission and the second ferroelectric state for non-transmission during the reset period. In the process, the backlight is turned off in synchronism with the reset period. Thus, although the reset period has a period during which the liquid crystal is in a transmission state, the display is recognized as black in the entire reset period and the trailing phenomenon is reduced during the entire reset period. Also, the driving waveforms shown in Fig. 11 has a non-selection period (R-NSe) for holding the reset state. Since this period is varied with the pixel position, the turn-off period is varied from one pixel to another. According to this embodiment, as shown in c1 of Fig. 11, the turn-off period is set to the length of the reset period for the pixel having the shortest reset period (the period of Rs alone).

According to this embodiment, as in the first embodiment, the length of the reset period can be adjusted by the reset period adjusting volume control 25 while watching the state of the image on display. As a result, the trailing phenomenon is caused in neither the animation with the display successively changing based on the display data nor the still image with the display not substantially changed. Further, this embodiment, like the first embodiment, includes a display data memory operating in interlocked relation with the mechanism for adjusting the length of the reset period, thereby making it possible to change the length of the reset period automatically.

Also, as in the first embodiment, the reset period adjusting volume control 25 and the backlight control circuit 26 are so set as to increase the brightness of the backlight with the increase in the length of the reset period and decrease the brightness with the decrease in the length of the reset period. Further, in the case where the length of the reset period is automatically changed, the backlight control circuit 26 changes the brightness of the backlight in accordance with the output of the display data comparison circuit 21c. By making this adjustment, a sufficiently bright, superior display quality was obtained even for a long reset period of black display.

By the way, this embodiment, as shown in Fig. 11, has a non-selection period (R-NSe) for holding the reset state in the scanning period, and as indicated in the driving waveforms c1, c2, c3 and this period becomes longer progressively as the pixel changes to a lower position in the drawing, so that the turn-off period gradually becomes longer. In other words, the lower the pixel position, the longer the black display period, resulting in a darker screen. For solving this inconvenience, the brightness of the backlight can be adjusted in accordance with the pixel position, or the order in which the screen is scanned is changed for each screen, e.g. top down or bottom up.

## Claims

1. A ferroelectric liquid crystal display, comprising
- a ferroelectric liquid crystal panel (20) holding a ferroelectric liquid crystal (2) between a pair of substrates (1a, 1b),
- means (21 to 26) for driving the ferroelectric liquid crystal panel to carry out a display based on display data within one respective frame period, wherein each frame period includes at least one scanning period with a selection period (Se) for selecting a display state, a non-selection period (Nse) for holding the display state, and a reset period (RS) for resetting the ferroelectric liquid crystal to black display state before the start of the scanning period, and
- a mechanism (21a, 21b, 21c, 22, 25) for adjusting the length of the reset period (RS)
**characterized in that**
- the mechanism (21 a, 21 b, 21 c, 22, 25) for adjusting the length of the reset period includes a plurality of display data memories (21a, 21b), each storing display data of one frame, and a display data comparison circuit (21 c) for comparing the display data of a plurality of frames stored in the memories successively or at intervals and outputting the result of the comparison, the mechanism being arranged to automatically adjust the length of the reset period in dependence of the output of the display data comparison circuit.

2. A ferroelectric liquid crystal display as set forth in claim 1, wherein the length of the reset period is adjusted to be increased when the output of the display data comparison circuit indicates a large change rate display and the length of the reset period is adjusted to be decreased when the output of the display data comparison circuit indicates a substantially nil or zero change rate display.

3. A ferroelectric liquid crystal display as set forth in claim 1or 2, wherein the reset period is provided for each pixel.

4. A ferroelectric liquid crystal display as set forth in claim 1 or 2, wherein the reset period is provided in such a manner as to reset all the pixels at the same time.

5. A ferroelectric liquid crystal display as set forth in any of claims 1to 4, wherein the ferroelectric liquid crystal panel includes a backlight (20B), said backlight being turned off during the reset period and turned on during the remaining period.

6. A ferroelectric liquid crystal display as set forth in claim 5, wherein a mechanism (21a, 21b, 21c, 26) for adjusting the brightness of the backlight in accordance with the length of the reset period is provided.

7. A ferroelectric liquid crystal display as set forth in claim 6, wherein the brightness of the backlight is adjusted to be increased when the length of the reset period increases, and the brightness of the backlight is adjusted to be decreased when the length of the reset period decreases.

8. A ferroelectric liquid crystal display as set forth in any of claims 1 to 7, wherein the ferroelectric liquid crystal has a first ferroelectric state and a second ferroelectric state during the reset period.

9. A ferroelectric liquid crystal display as set forth in any of claims 1 to 8, wherein the mechanism for adjusting the length of the reset period includes a reset period adjusting control device (25).

10. A method of driving a ferroelectric liquid crystal display comprising a ferroelectric liquid crystal panel holding a ferroelectric liquid crystal between a pair of substrates, and means for driving the ferroelectric liquid crystal panel to carry out a display based on display data within one respective frame period, wherein the method comprises in each frame period the steps of
- resetting in each frame period the ferroelectric liquid crystal to black display state in a reset period, followed by
- scanning in each frame period the display by selecting a display state in a selection period and then holding the display state in a non-selection period,
**characterized by** further
- providing for manually adjusting the length of the reset period in dependence of the display data by lengthening the reset period in case of displaying a rapid motion, and shortening the reset period in case of displaying a still image.

11. A method of driving a ferroelectric liquid crystal display comprising a ferroelectric liquid crystal panel holding a ferroelectric liquid crystal between a pair of substrates, and means for driving the ferroelectric liquid crystal panel to carry out a display based on display data within one respective frame period, wherein the method comprises in each frame period the steps of
- resetting in each frame period the ferroelectric liquid crystal to black display state in a reset period, followed by
- scanning in each frame period the display by selecting a display state in a selection period and then holding the display state in a non-selection period,
**characterized by** further
- automaticallyadjusting the length of the reset period in dependence of the output of a display data comparison circuit which compares the display data of a plurality of frames stored in a plurality of display data memories.

## Patentansprüche

1. Ferroelektrische Flüssigkristallanzeige mit
- einem ferroelektrischen Flüssigkristallpanel (20), das einen ferroelektrischen Flüssigkristall (2) zwischen einem Paar von Substraten (1a, 1 b) hält,
- Mitteln (21 bis 26) zum Ansteuern des ferroelektrischen Flüssigkristallpanels, um basierend auf Anzeigedaten innerhalb einer jeweiligen Einzelbildperiode eine Anzeige auszuführen, wobei jede Einzelbildperiode wenigstens eine Abtastperiode mit einer Auswahlperiode (Se) zum Auswählen eines Anzeigezustands, eine Nicht-Auswahlperiode (Nse) zum Halten des Anzeigezustands und eine Rücksetzperiode (RS) zum Zurücksetzen des ferroelektrischen Flüssigkristalls in einen Schwarzanzeigezustand vor dem Start der Abtastperiode beinhaltet, und
- einem Mechanismus (21 a, 21 b, 21 c, 22, 25) zum Einstellen der Länge der Rücksetzperiode (RS),
**dadurch gekennzeichnet, dass**
- der Mechanismus (21 a, 21 b, 21 c, 22, 25) zum Einstellen der Länge der Rücksetzperiode eine Mehrzahl von Anzeigedatenspeichern (21 a, 21 b), die jeweils Anzeigedaten eines Einzelbildes speichern, und einen Anzeigedatenvergleichsschaltkreis (21 c) beinhaltet, um die Anzeigedaten einer Mehrzahl von Einzelbildern, die in den Speichern gespeichert sind, sukzessive oder in Intervallen zu vergleichen und das Ergebnis des Vergleichs auszugeben, wobei der Mechanismus so angeordnet ist, dass die Länge der Rücksetzperiode in Abhängigkeit von der Ausgabe des Anzeigedatenvergleichsschaltkreises automatisch eingestellt wird.

2. Ferroelektrische Flüssigkristallanzeige nach Anspruch 1, wobei die Länge der Rücksetzperiode anwachsend eingestellt wird, wenn die Ausgabe des Anzeigedatenvergleichsschaltkreises eine Anzeige mit großer Änderungsrate indiziert, und die Länge der Rücksetzperiode verringernd eingestellt wird, wenn die Ausgabe des Anzeigedatenvergleichsschaltkreises eine Anzeige mit einer Änderungsrate von im Wesentlichen null oder gleich null indiziert.

3. Ferroelektrische Flüssigkristallanzeige nach Anspruch 1 oder 2, wobei die Rücksetzperiode für jedes Pixel bereitgestellt wird.

4. Ferroelektrische Flüssigkristallanzeige nach Anspruch 1 oder 2, wobei die Rücksetzperiode derart bereitgestellt wird, dass alle Pixel gleichzeitig zurückgesetzt werden.

5. Ferroelektrische Flüssigkristallanzeige nach einem der Ansprüche 1 bis 4, wobei das ferroelektrische Flüssigkristallpanel eine Hintergrundbeleuchtung (20B) beinhaltet, wobei die Hintergrundbeleuchtung während der Rücksetzperiode ausgeschaltet ist und während der restlichen Zeitspanne eingeschaltet ist.

6. Ferroelektrische Flüssigkristallanzeige nach Anspruch 5, wobei ein Mechanismus (21 a, 21 b, 21 c, 26) zum Einstellen der Helligkeit der Hintergrundbeleuchtung gemäß der Länge der Rücksetzperiode vorgesehen ist.

7. Ferroelektrische Flüssigkristallanzeige nach Anspruch 6, wobei die Helligkeit der Hintergrundbeleuchtung anwachsend eingestellt ist, wenn die Länge der Rücksetzperiode zunimmt, und die Helligkeit der Hintergrundbeleuchtung verringernd eingestellt wird, wenn die Länge der Rücksetzperiode abnimmt.

8. Ferroelektrische Flüssigkristallanzeige nach einem der Ansprüche 1 bis 7, wobei der ferroelektrische Flüssigkristall während der Rücksetzperiode einen ersten ferroelektrischen Zustand und einen zweiten ferroelektrischen Zustand aufweist.

9. Ferroelektrische Flüssigkristallanzeige nach einem der Ansprüche 1 bis 8, wobei der Mechanismus zum Einstellen der Länge der Rücksetzperiode eine Rücksetzperiodeneinstellsteuervorrichtung (25) beinhaltet.

10. Verfahren zum Ansteuern einer ferroelektrischen Flüssigkristallanzeige mit einem ferroelektrischen Flüssigkristallpanel, das einen ferroelektrischen Flüssigkristall zwischen einem Paar von Substraten hält, und Mitteln zum Ansteuern des ferroelektrischen Flüssigkristallpanels, um basierend auf Anzeigedaten innerhalb einer jeweiligen Einzelbildperiode eine Anzeige auszuführen, wobei das Verfahren in jeder Einzelbildperiode die Schritte umfasst:
- Zurücksetzen des ferroelektrischen Flüssigkristalls in jeder Einzelbildperiode in einen Schwarzanzeigezustand in einer Rücksetzperiode, gefolgt von einem
- Abtasten der Anzeige in jeder Einzelbildperiode durch Auswählen eines Anzeigezustands in einer Auswahlperiode und anschließendes Halten des Anzeigezustands in einer Nicht-Auswahlperiode,
weiter **gekennzeichnet durch**
- Bereitstellen einer manuellen Einstellung der Länge der Rücksetzperiode in Abhängigkeit von den Anzeigedaten durch Verlängern der Rücksetzperiode im Fall des Anzeigens einer schnellen Bewegung und Verkürzen der Rücksetzperiode im Fall des Anzeigens eines stehenden Bildes.

11. Verfahren zum Ansteuern einer ferroelektrischen Flüssigkristallanzeige mit einem ferroelektrischen Flüssigkristallpanel, das einen ferroelektrischen Flüssigkristall zwischen einem Paar von Substraten hält, und Mitteln zum Ansteuern des ferroelektrischen Flüssigkristallpanels, um basierend auf Anzeigedaten innerhalb einer jeweiligen Einzelbildperiode eine Anzeige auszuführen, wobei das Verfahren in jeder Einzelbildperiode die Schritte umfasst:
- Zurücksetzen des ferroelektrischen Flüssigkristalls in jeder Einzelbildperiode in einen Schwarzanzeigezustand in einer Rücksetzperiode, gefolgt von einem
- Abtasten der Anzeige in jeder Einzelbildperiode durch Auswählen eines Anzeigezustands in einer Auswahlperiode und anschließendes Halten des Anzeigezustands in einer Nicht-Auswahlperiode,
weiter **gekennzeichnet durch**
- automatisches Einstellen der Länge der Rücksetzperiode in Abhängigkeit von der Ausgabe eines Anzeigedatenvergleichsschaltkreises, der die Anzeigedaten einer Mehrzahl von Einzelbildern vergleicht, die in einer Mehrzahl von Anzeigedatenspeichern gespeichert sind.

## Revendications

1. Afficheur à cristaux liquides ferroélectriques, comprenant
- un panneau à cristaux liquides ferroélectriques (20) maintenant un cristal liquide ferroélectrique (2) entre une paire de substrats (1a, 1b),
- un moyen (21 à 26) destiné à entraîner le panneau à cristaux liquides ferroélectriques à effectuer un affichage basé sur des données d'affichage dans une période de trame respective, dans lequel chaque période de trame inclut au moins une période de balayage avec une période de sélection (Se) destinée à sélectionner un état d'affichage, une période de non-sélection (Nse) destinée à maintenir l'état d'affichage, et une période de réinitialisation (RS) destinée à réinitialiser le cristal liquide ferroélectrique dans l'état d'affichage noir avant le début de la période de balayage, et
- un mécanisme (21 a, 21 b, 21 c, 22, 25) destiné à ajuster la durée de la période de réinitialisation (RS),
**caractérisé en ce que**
- le mécanisme (21 a, 21 b, 21c, 22, 25) destiné à ajuster la durée de la période de réinitialisation inclut une pluralité de mémoires de données d'affichage (21 a, 21 b), dans chacune desquelles sont stockées des données d'affichage d'une trame, et un circuit de comparaison de données d'affichage (21c) destiné à comparer les données d'affichage d'une pluralité de trames stockées dans les mémoires successivement ou à des intervalles et à fournir en sortie le résultat de la comparaison, le mécanisme étant conçu pour ajuster automatiquement la durée de la période de réinitialisation en fonction de la sortie du circuit de comparaison de données d'affichage.

2. Afficheur à cristaux liquides ferroélectriques selon la revendication 1, dans lequel la durée de la période de réinitialisation est ajustée pour être augmentée quand la sortie du circuit de comparaison de données d'affichage indique un affichage au taux de changement élevé et la durée de la période de réinitialisation est ajustée pour être diminuée quand la sortie du circuit de comparaison de données d'affichage indique un affichage au taux de changement sensiblement nul ou de zéro.

3. Afficheur à cristaux liquides ferroélectriques selon la revendication 1 ou 2, dans lequel la période de réinitialisation est prévue pour chaque pixel.

4. Afficheur à cristaux liquides ferroélectriques selon la revendication 1 ou 2, dans lequel la période de réinitialisation est prévue de manière à réinitialiser tous les pixels en même temps.

5. Afficheur à cristaux liquides ferroélectriques selon l'une quelconque des revendications 1 à 4, dans lequel le panneau à cristaux liquides ferroélectriques inclut un rétroéclairage (20B), ledit rétroéclairage étant éteint pendant la période de réinitialisation et allumé pendant la période restante.

6. Afficheur à cristaux liquides ferroélectriques selon la revendication 5, dans lequel un mécanisme (21 a, 21 b, 21 c, 26) destiné à ajuster la luminosité du rétroéclairage en fonction de la durée de la période de réinitialisation est prévu.

7. Afficheur à cristaux liquides ferroélectriques selon la revendication 6, dans lequel la luminosité du rétroéclairage est ajustée pour être augmentée quand la durée de la période de réinitialisation augmente, et la luminosité du rétroéclairage est ajustée pour être diminuée quand la durée de la période de réinitialisation diminue.

8. Afficheur à cristaux liquides ferroélectriques selon l'une quelconque des revendications 1 à 7, dans lequel le cristal liquide ferroélectrique a un premier état ferroélectrique et un deuxième état ferroélectrique pendant la période de réinitialisation.

9. Afficheur à cristaux liquides ferroélectriques selon l'une quelconque des revendications 1 à 8, dans lequel le mécanisme destiné à ajuster la durée de la période de réinitialisation inclut un dispositif de commande d'ajustement de la période de réinitialisation (25).

10. Procédé d'entraînement d'un afficheur à cristaux liquides ferroélectriques comprenant un panneau à cristaux liquides ferroélectriques maintenant un cristal liquide ferroélectrique entre une paire de substrats, et un moyen destiné à entraîner le panneau à cristaux liquides ferroélectriques à effectuer un affichage basé sur des données d'affichage dans une période de trame respective, dans lequel le procédé comprend dans chaque période de trame les étapes suivantes :
- la réinitialisation dans chaque période de trame du cristal liquide ferroélectrique dans l'état d'affichage noir dans une période de réinitialisation, suivie du
- balayage dans chaque période de trame de l'affichage en sélectionnant un état d'affichage dans une période de sélection, puis du maintien de l'état d'affichage dans une période de non-sélection,
**caractérisé en outre par**
- la possibilité d'un ajustement manuel de la durée de la période de réinitialisation en fonction des données d'affichage en allongeant la période de réinitialisation en cas d'affichage en mouvement rapide, et en raccourcissant la période de réinitialisation en cas d'affichage d'une image fixe.

11. Procédé d'entraînement d'un afficheur à cristaux liquides ferroélectriques comprenant un panneau à cristaux liquides ferroélectriques maintenant un cristal liquide ferroélectrique entre une paire de substrats, et un moyen d'entraînement du panneau à cristaux liquides ferroélectriques pour effectuer un affichage basé sur des données d'affichage dans une période de trame respective, dans lequel le procédé comprend dans chaque période de trame les étapes suivantes :
- la réinitialisation dans chaque période de trame du cristal liquide ferroélectrique dans l'état d'affichage noir dans une période de réinitialisation, suivie du
- balayage dans chaque période de trame de l'affichage en sélectionnant un état d'affichage dans une période de sélection, puis du maintien de l'état d'affichage dans une période de non-sélection,
**caractérisé en outre par**
- l'ajustement automatique de la durée de la période de réinitialisation en fonction de la sortie d'un circuit de comparaison de données d'affichage qui compare les données d'affichage d'une pluralité de trames stockées dans une pluralité de mémoires de données d'affichage.
